# EUROPÄISCHE PATENTSCHRIFT

(11) **EP 1 240 439 B1**
(45) Veröffentlichungstag und Bekanntmachung des Hinweises auf die Patenterteilung: **07.09.2005**
(21) Anmeldenummer: 00983306.2
(22) Anmeldetag: 13.12.2000
(51) Int. Cl.: F16D 1/068

(54) **RING ZUR DREHMOMENTÜBERTRAGUNG UND AXIALEN SICHERUNG ZWEIER ROTIERENDER BAUTEILE**
RING FOR TRANSMITTING TORQUE AND FOR AXIALLY SECURING TWO ROTATING COMPONENTS
ANNEAU POUR LA TRANSMISSION DU COUPLE ET LE MAINTIEN AXIAL DE DEUX ELEMENTS ROTATIFS

(30) Priorität: 22.12.1999 DE 19961988
(43) Veröffentlichungstag der Anmeldung: 18.09.2002
(73) Patentinhaber: ZF FRIEDRICHSHAFEN Aktiengesellschaft, 88038 Friedrichshafen (DE)
(72) Erfinder: HAUPT, Josef, 88069 Tettnang (DE); SKRABS, Alfred, 66271 Sitterswald (DE); BEISSWENGER, Andreas, 88212 Ravensburg (DE)
(86) Internationale Anmeldenummer: PCT/EP2000/012639
(87) Internationale Veröffentlichungsnummer: WO 2001/046599

(56) Entgegenhaltungen:
- US-A- 4 944 376

## Beschreibung

Die vorliegende Erfindung betrifft eine Vorrichtung zur gleichzeitigen Drehmomentübertragung und axialen Sicherung zweier drehmomenführender Bauteile, nach dem Oberbegriff des Patentanspruches 1 sowie ein Verfahren zur Herstellung und ein Verfahren zur Verbindung zweier drehmomentführender Bauteile, die diese Vorrichtung aufweisen.

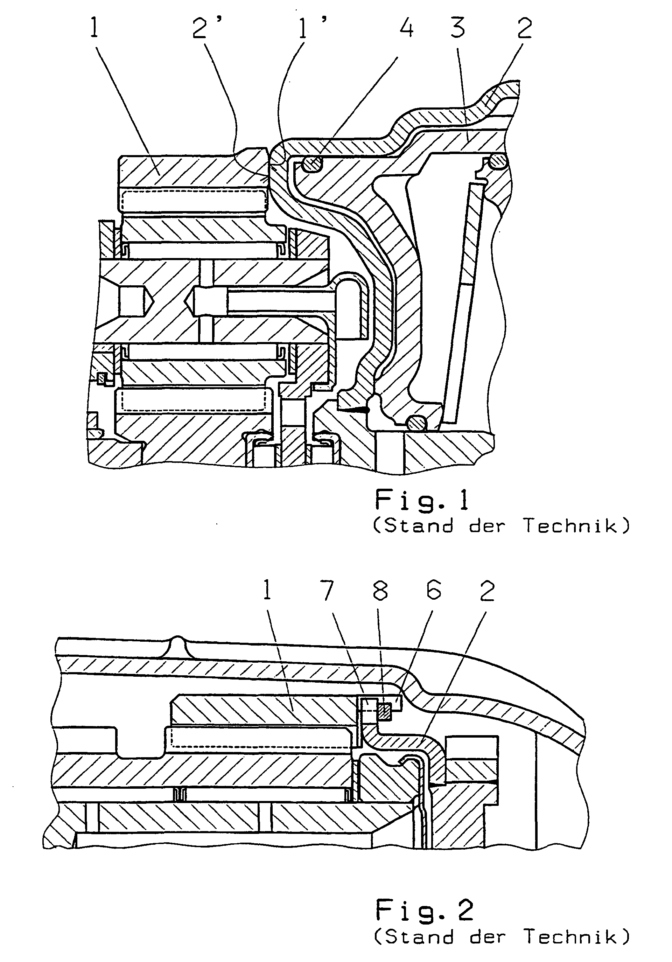

Im folgenden werden im Zusammenhang mit den Fig. 1 bis 3 bekannte Anordnungen zur Drehmomentübertragung zwischen zwei drehmomentführenden Bauteilen erläutert.

Beispielsweise erfolgt in Fig. 1 eine Drehmomentübertrag zwischen einem Hohlrad 1 und einem Mitnahmeteil 2 in der Form eines Zylinders einer Lamellenkupplung (nicht näher dargestellt), wobei im Zylinder in an sich bekannter Weise ein Kolben 3 axial verschieblich gelagert ist, der in Bezug auf den Zylinder durch eine ringförmige Dichtung 4 abgedichtet ist. Zur Drehmomentübertragung sind das Hohlrad 1 und der Zylinderrücken des Zylinders an ihren aneinanderliegenden Flächen 1' und 2' verschweißt. Ein Nachteil einer solchen Lösung besteht darin, dass ein Zwangslauf zwischen dem Hohlrad 1 und dem Zylinder besteht und kein tangentialer, radialer und axialer Spielausgleich möglich sind.

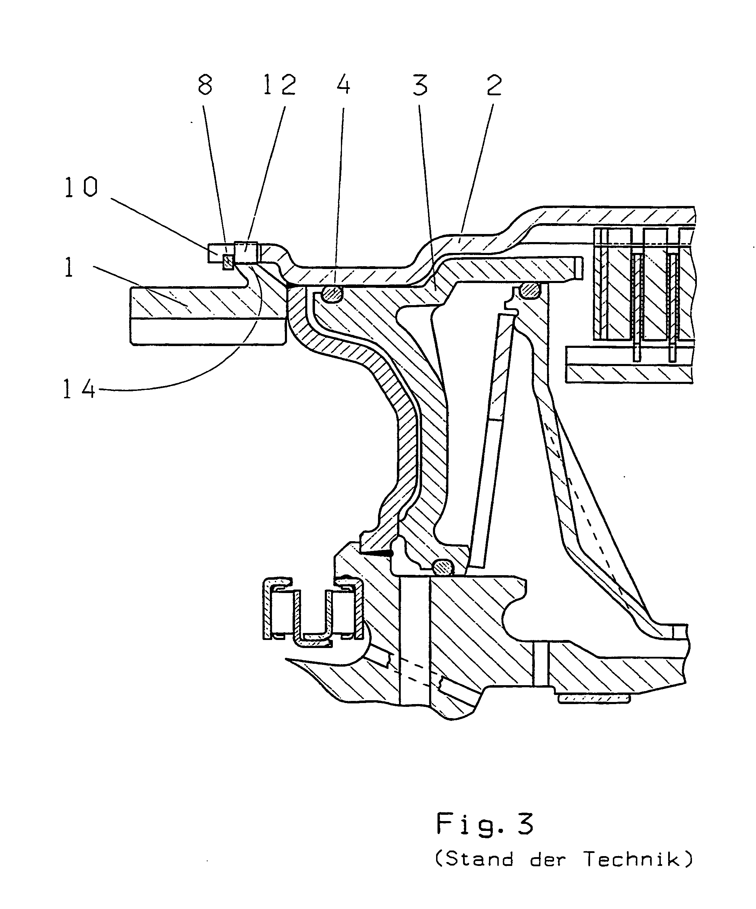

Die Fig. 2 zeigt eine bekannte Anordnung zur Drehmomentübertragung, zwischen einem Hohlrad 1 und einem Mitnahmeteil 2, wobei im Hohlrad 1 an der dem Mitnahmeteil 2 zugewandten Seite eine Kronenverzahnung 6 angeordnet ist, in die Zähne 7 des Mitnahmeteiles 2 in axialer Richtung eingesteckt werden. In axialer Richtung wird das Mitnahmeteil 2 durch einen Sprengring 8 in der dargestellten Weise gesichert. Das Problem einer solchen Lösung besteht insbesondere darin, dass in jedem Hohlrad 1 separat durch eine Fräsoperation die Kronenverzahnung 6 hergestellt werden muß. Es ist erkennbar, dass eine derartige Herstellung von Hohlrädern extrem kostspielig ist. Außerdem ist ein zusätzliches Bauteil in der Form des Sprengringes 8 erforderlich, wodurch die Herstellung der Einrichtung weiter verteuert wird. Diese Lösung läßt jedoch in der gewünschten Weise einen gewissen tangentialen, radialen und axialen Spielausgleich zu.

In der Fig. 3 ist eine weitere Anordnung zur Drehmomentübertragung dargestellt, bei der im Mitnahmeteil 2 eine Kronenverzahnung 10 angeordnet ist, in die eine Kronenverzahnung 12 eingreift, die sich an einem radial über das Hohlrad 1 vorstehenden Flansch 14 befindet. Auch diese Lösung ist erkennbar aufwendig und teuer, weil im Mitnahmeteil 2 eine gestanzte Kronenverzahnung 10 und im Hohlrad 1 eine durch eine separate Fräsoperation herzustellende Kronenverzahnung 12 erforderlich sind. Zudem ist auch ein zusätzliches Bauteil zur axialen Sicherung in der Form des Sprengringes 8 erforderlich.

Mehrere Beispiele einer Kronenverzahnung als Verbindung zwischen zwei drehmomentführenden zylinderringförmigen Bauteilen sind auch aus der US 4,944,376 bekannt. Dabei sind beide miteinander zu verbindenden Bauteile als Blechteil ausgeführt und weisen beide jeweils an ihrem Umfang verteilt voneinander beabstandete Vorsprünge auf, die dann als eine Art Kronenverzahnung beim formschlüssigen Ineinanderfügen der beiden Bauteile miteinander korrespondieren, wobei eine Axialsicherung beider Bauteile nach dem formschlüssigen Ineinanderfügen zum Teil nicht vorhanden ist.

Die Aufgabe der vorliegenden Erfindung besteht darin, eine Vorrichtung zur gleichzeitigen Drehmomentübertragung und axialer Sicherung zweier drehmomentführender Bauteile zu schaffen, die eine relativ einfache Verbindung der beiden Bauteile ermöglicht und dabei einen tangentialen, radialen und axialen Spielausgleich zuläßt. Außerdem schafft die Erfindung ein Verfahren zur Herstellung und zur Verbindung zweier drehmomentführender Bauteile, die diese Vorrichtung aufweisen.

Die erfindungsgemäße Aufgabe wird durch eine Vorrichtung zur gleichzeitigen Drehmomentübertragung und axialen Sicherung zweier drehmomentführender Bauteile mit den Merkmalen des Patentanspruches 1 und durch ein Verfahren mit den Merkmalen der Patentansprüche 5 und 6 und durch ein Verfahren mit den Merkmalen des Patentanspruches 7 gelöst.

Der wesentliche Vorteil der Erfindung besteht darin, dass eine Verbindung zwischen zwei Bauteilen in einer besonders einfachen Weise dadurch herstellbar ist, dass an die Stirnseite des ersten Bauteils eine Verzahnung des zweiten Bauteils in axialer Richtung angelegt wird, dass das die Form eines Segementringes aufweisende erfindungsgemäße Bauelement in axialer Richtung an die Verzahnung des zweiten Bauteils angelegt wird, derart, dass jeweils ein Vorsprung des Bauelementes in eine Lücke zwischen zwei Zähnen der Verzahnung des zweiten Bauteils eingreift und an der Stirnseite des ersten Bauteils anliegt, und dass schließlich der in die Lücke eingreifende Vorsprung an dem ersten Bauteil befestigt wird. Auf diese Weise wird zwischen dem ersten und zweiten Bauteil ein Tangentialspiel, ein Radialspiel und ein Axialspiel sichergestellt und wird gleichzeitig vermieden, dass am ersten Bauteil eine aufwendige Kronenverzahnung erforderlich ist. Der genannte Spielausgleich in tangentialer, radialer und axialer Richtung wird vorteilhafterweise gleichzeitig mit der axialen Sicherung zwischen den beiden Bauteilen mit der erfindungsgemäßen Vorrichtung erzielt.

Das erfindungsgemäße Bauelement ist vorteilhafterweise durch eine einfache Stanz- und Prägeoperation herstellbar.

Gemäß einem weiteren Vorteil der Erfindung kann auch das zweite Bauteil mit der Verzahnung durch eine Stanzoperation hergestellt werden.

Die Bauteilverbindung kann vorteilhafterweise bei geringem radialen Raumbedarf erfolgen, da keine Sprengringmontage erforderlich ist.

Vorteilhafte Ausgestaltungen der Erfindung gehen aus den Unteransprüchen hervor.

Im folgenden werden die Erfindung und deren Ausgestaltungen im Zusammenhang mit den Figuren näher erläutert.
Es zeigen:
- Fig. 1: eine bekannte Art der Drehmomentübertragung zwischen zwei Bauteilen, wobei die Bauteile stumpf aneinander verschweißt sind;
- Fig. 2: eine weitere bekannte Art der Drehmoment-übertragung zwischen zwei Bauteilen, wobei das eine Bauteil in eine Kronenverzahnung des anderen Bauteils eingreift und zur axialen Sicherung ein zusätzlicher Springring vorgesehen ist;
- Fig. 3: eine weitere bekannte Art der Drehmomentübertragung zwischen zwei Bauteilen, wobei die beiden Bauteile über zwei Kronenverzahnungen aneinander angreifen und zur axialen Sicherung ein zusätzlicher Sprengring vorgesehen ist;
- Fig. 4: eine perspektivische Darstellung der erfindungsgemäßen Vorrichtung in der Form eines Segmentringes;
- Fig. 5: eine Seitenansicht entlang der Linien V-V der Fig. 4 der erfindungsgemäßen Vorrichtung;
- Fig. 6: zum Teil im Schnitt eine axiale Ansicht der beiden Bauteile sowie des Segmentringes zur Erläuterung des tangentialen und radialen Spielausgleichs;
- Fig. 7: einen axialen Schnitt durch die an zwei Bauteilen montierte erfindungsgemäße Vorrichtung und
- Fig. 8: eine Ansicht entsprechend der Linien VIII-VIII der Fig. 7.

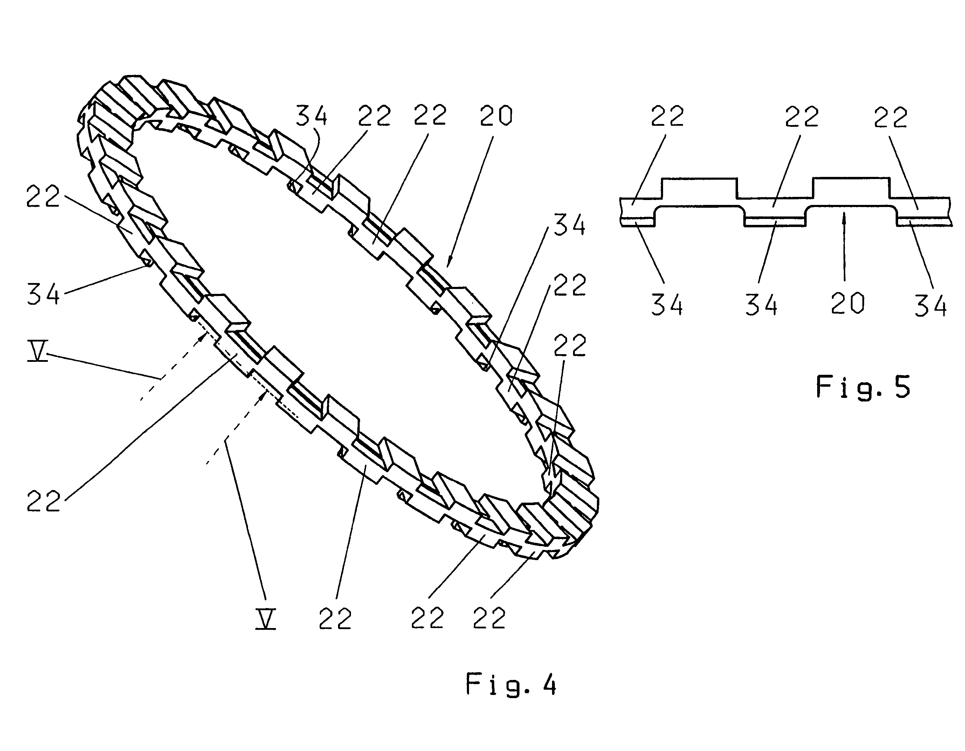

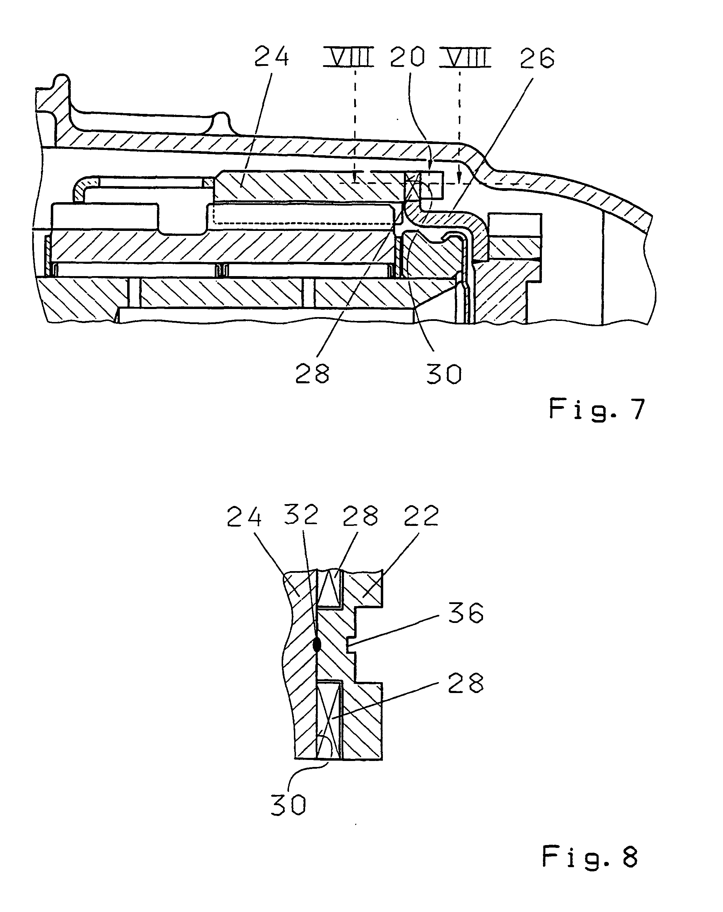

Gemäß Fig. 4 weist die vorliegende Vorrichtung im wesentlichen die Form eines kreisringförmigen Bauelements 20 auf, das entlang seines Umfangs voneinander beabstandete axiale Vorsprünge 22 besitzt, die vorzugsweise durch eine Prägeoperation aus dem ringförmigen Bauelement 20 zu einer Seite ausgestellt sind. Dabei entspricht diese eine Seite gemäß den Fig. 7 und 8 der dem ersten Bauteil 24 und dem zweiten Bauteil 26, die durch die erfindungsgemäße Vorrichtung zur gleichzeitigen Drehmomentübertragung und axialen Sicherung aneinander zu befestigen sind, zugewandten Seite. Dabei weist das erste Bauteil 24 gemäß Fig. 7 vorzugsweise die Form eines Hohlrades auf, an dem als zweites Bauteil 26 ein Mitnahmeteil zu befestigen ist, das entlang seines Umfangs vorzugsweise gleichmäßig voneinander beabstandete zahnartige Vorsprünge 28 aufweist, die an einer ihnen zugewandten Stirnseite des ersten Bauteils 24 zur Anlage gebracht werden.

Zur radialen und axialen Befestigung der Bauteile 24 und 26 aneinander wird das Bauelement 20 in axialer Richtung so auf die aneinander anliegenden Bauteile 24, 26 aufgesetzt, dass die Vorsprünge 22 des Bauelementes 20 in die Lücken zwischen den Vorsprüngen 28 des Bauteils 26 eingreifen. Es liegen dann die dem Bauteil 24 zugewandten Seiten der Vorsprünge 22 an der Fläche 30 des Bauteils 24 an.

Die eigentliche Befestigung des Bauelementes 20 an dem Bauteil 24 erfolgt dann durch eine Befestigungsoperation, vorzugsweise durch eine Schweißoperation, insbesondere durch eine kostengünstige KE-Schweißoperation oder eine Laser- bzw. BE-Schweißoperation mit radialem Schweißstrahl. In bestimmten Anwendungsfällen ist es auch denkbar, die Befestigung durch Verkleben auszuführen.

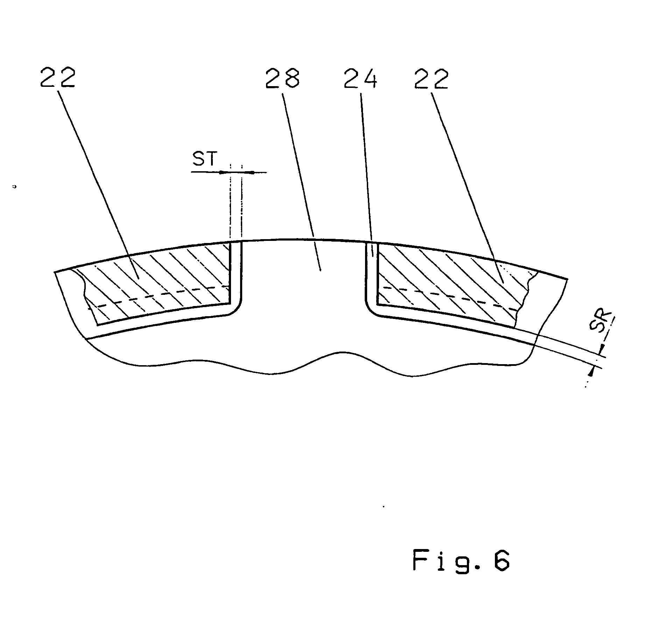

Es werden dann gemäß Fig. 6 die Vorsprünge 28 des Bauteils 26 zwischen den Vorsprüngen 22 des Bauelementes 20 gehalten, wobei die Möglichkeit eines tangentialen Spiels ST sowie eines radialen Spiels SR besteht. Die axiale Sicherung erfolgt, wie dies auch aus der Fig. 8 ersichtlich ist, durch die Aufnahme der Vorsprünge 28 des Bauteiles 26 zwischen der Fläche 30 des Bauteiles 24 und jeweils zwei Vorsprünge 22 des Bauelementes 20 überbrückenden Bereichen des Bauelementes 20, wobei ein axiales Spiel möglich ist.

Gemäß den Fig. 4, 5 und 8 ist es denkbar, bei der Prägeoperation zur Herstellung der Vorsprünge 22 in dem ringförmigen Bauelement 20 an den Vorsprüngen 22 an der dem Bauteil 24 zugewandten Seite jeweils eine rippenartig vorstehende Erhebung 34 zu erzeugen, die nach dem Einsetzen der Vorsprünge 22 in der erläuterten Weise in die Lücken zwischen den Vorsprüngen 28 des Bauteils 26 an der Fläche 30 des Bauteils 24 zur Anlage gelangen. Gemäß Fig. 8 werden diese rippenartigen Erhebungen 34 bei der Schweißoperation als Schweißmaterialvorrat verwendet, das bei der Ausführung einer Schweißoperation als zur Herstellung einer Schweißnaht 32 verwendet wird.

Während der Prägeoperation entsteht bei der Herstellung der rippenartigen Erhebungen 30 auf der gegenüberliegenden Seite jeweils eine entsprechende Vertiefung 36 in dem ringförmigen Bauelement 20 im Bereich des Vorsprunges 22. Vorzugsweise besteht das Bauelement 20 aus Stahl.

### Bezugszeichen

- 1: Hohlrad
- 1': Fläche
- 2: Mitnahmeteil
- 2': Fläche
- 3: Kolben
- 4: Dichtung
- 6: Kronenverzahnung
- 7: Zähne
- 8: Sprengring
- 10: Kronenverzahnung
- 12: Kronenverzahnung
- 14: Flansch

- 20: Bauelement
- 21: Vorsprung
- 24: Bauteil
- 26: Bauteil
- 28: Vorsprung
- 30: Fläche
- 32: Schweißnaht
- 34: Erhebung
- 36: Vertiefung

## Patentansprüche

1. Vorrichtung zur Drehmomentübertragung und axialen Sicherung eines ersten (24) und eines zweiten (26) drehmomentführenden Bauteils, **dadurch gekennzeichnet , dass** die Vorrichtung die Form eines ringförmigen Bauelements (20) besitzt, das entlang seines Umfangs voneinander beabstandete Vorsprünge (22) aufweist, die in Lücken zwischen Vorsprüngen (28) des zweiten, an einer Fläche (30) des ersten Bauteils (24) anliegenden Bauteils (26) derart einsetzbar sind, dass die der Fläche (30) des ersten Bauteils (24) zugewandten Seiten der Vorsprünge (22) an der Fläche (30) des ersten Bauteil (24) befestigbar sind.

2. Vorrichtung nach Anspruch 1, **dadurch gekennzeichnet, dass** die Vorsprünge (22) entlang des Umfangs des Bauelements (20) gleichmäßig voneinander beabstandet sind.

3. Vorrichtung nach Anspruch 1 oder 2, **dadurch gekennzeichnet, dass** die Vorsprünge (22) jeweils an der der Fläche (30) des ersten Bauteils (24) zugewandten Seite eine in der Umfangsrichtung des Bauelementes (20) verlaufende rippenförmige Erhebung (34) aufweisen, die beim Befestigen der Vorsprünge (22) an dem ersten Bauteil (24) durch eine Schweißoperation als Schweißmaterialvorrat dienen.

4. Vorrichtung nach Anspruche 1, 2 oder 3, **dadurch gekennzeichnet, dass** das Bauelement (20) aus Stahl besteht.

5. Verfahren zur Herstellung eines eine Vorrichtung nach Anspruch 1 oder 2 aufweisenden ersten (24) und zweiten (26) drehmomentführenden Bauteils, **dadurch gekennzeichnet , dass** das ringförmige Bauelement (20) und die Vorsprünge (22) gleichzeitig durch eine Stanz- und Prägeoperation hergestellt sind.

6. Verfahren zur Herstellung eines eine Vorrichtung nach Anspruch 3 oder 4 aufweisenden ersten (24) und zweiten (26) drehmomentführenden Bauteils, **dadurch gekennzeichnet, dass** die rippenförmigen Erhebungen (34) in den Vorsprüngen (22) gleichzeitig mit dem Prägen der Vorsprünge (22) hergestellt sind.

7. Verfahren zur Befestigung eines eine Vorrichtung nach einem der Ansprüche 1 bis 4 aufweisenden ersten (24) und zweiten (26) drehmomentführenden Bauteils aneinander, **dadurch gekennzeichnet, dass** an einer Fläche (30) des ersten Bauteils (24) in axialer Richtung die Vorsprünge (28) des zweiten Bauteils (26) zur Anlage gebracht werden, dass das Bauelement (20) in axialer Richtung derart an dem zweiten Bauteil (26) zur Anlage gebracht wird, dass die Vorsprünge (22) des Bauelements (20) jeweils in Lücken zwischen benachbarten Vorsprüngen (28) des zweiten Bauteils (26) eingreifen, derart, dass ihre dem ersten Bauteil (24) zugewandten Seiten an der Fläche (30) des ersten Bauteils (24) anliegen und dass die Vorsprünge (22) durch eine Befestigungsoperation an der Fläche (30) des ersten Bauteils (24) befestigt werden.

8. Verfahren nach Anspruch 7, **dadurch gekennzeichnet, dass** die Vorsprünge (22) des Bauelementes (20) gegebenenfalls unter Verbrauch des Materials der rippenförmigen Erhebungen (34) der Vorsprünge (22) des Bauelementes (20) an der Fläche (30) des ersten Bauteils (24) durch eine Schweißoperation befestigt werden.

9. Verfahren nach Anspruch 8, **dadurch gekennzeichnet, dass** das Verschweißen des Bauelementes (20) durch eine KE-Schweißoperation erfolgt.

10. Verfahren nach Anspruch 8, **dadurch gekennzeichnet, dass** das Verschweißen des Bauelementes (20) durch eine Laser- oder EB-Schweißoperation erfolgt.

11. Verfahren nach Anspruch 9 oder 10, **dadurch gekennzeichnet, dass** die Befestigung der Vorsprünge (22) durch Verkleben erfolgt.

## Claims

1. The invention relates to a device for transmitting torque and for axially securing a first (24) and a second (26) torque-carrying component, **characterized in that** the device has the shape of an annular component (20) with projections (22) spaced on its circumference, with these projections being insertable in gaps between projections (28) of the second component (26), which is contiguous to a surface (30) of the first component (24), in such a way that those sides of the projections (22) facing the surface (30) of the first component (24) can be fastened to the surface (30) of the first component (24).

2. A device according to claim 1, **characterized in that** the projections (22) are equidistantly spaced on the circumference of the component (20).

3. A device according to claim 1 or 2, **characterized in that** each of the projections (22) features a rib-shaped elevation (34) on the side facing the surface (30) of the first component (24), with these elevations running along the circumference of the component and serving as welding material for the welding process when the projections (22) are fastened to the first component (24).

4. A device according to claim 1, 2 or 3, **characterized in that** the component (20) is made of steel.

5. A method for producing a first (24) and a second (26) torque-carrying component featuring a device according to claim 1 or 2, **characterized in that** the annular component (20) and the projections (22) are simultaneously produced by means of a punching and stamping operation.

6. A method for producing a first (24) and a second (26) torque-carrying component featuring a device according to claim 3 or 4, **characterized in that** the rib-shaped elevations (34) in the projections (22) are produced simultaneously when the projections (22) are punched.

7. A method for fastening a first (24) and a second (26) torque-carrying component to each other, with the components featuring a device according to one of the claims 1 through 4, **characterized in that** the projections (28) of the second component (26) are made to contact a surface (30) of the first component (24) in axial direction; that the component (20) is made to contact the second component (26) in axial direction in such a way that the projections (22) of the component (20) engage in gaps between neighboring projections (28) of the second component (26), in such a way that their sides facing the first component (24) abut on the surface (30) of the first component (24) and that the projections (22) are fastened by means of a fastening operation to the surface (30) of the first component (24).

8. A method according to claim 7, **characterized in that** the projections (22) of the component (20) are fastened to the surface (30) of the first component (24) by means of a welding operation, if necessary with the material of the rib-shaped elevations (34) of the projections (22) of the component (20) being used.

9. A method according to claim 8, **characterized in that** welding of the component (20) is performed by means of a KE welding operation.

10. A method according to claim 8, **characterized in that** welding of the component (20) is performed by means of a laser or EB welding operation.

11. A method according to claim 9 or 10, **characterized in that** fastening of the projections (22) is performed through bonding.

## Revendications

1. Dispositif de transmission de couple et de fixation axiale d'un premier (24) et d'un deuxième (26) éléments de transmission de couple, **caractérisé en ce que** le dispositif a la forme d'un élément annulaire (20), comportant sur sa circonférence des épaulements (22) écartés l'un de l'autre qui peuvent être insérés dans des creux entre des épaulements (28) du deuxième élément (26) adjacent sur une surface (30) du premier élément (24), de manière à ce que les faces des épaulements (22) tournées vers la surface (30) du premier élément (24) peuvent être fixées à la surface (30) du premier élément (24).

2. Dispositif selon la revendication 1, **caractérisé en ce que** les épaulements (22) sont écartés l'un de l'autre de manière uniforme et le long de la circonférence de l'élément (20).

3. Dispositif selon la revendication 1 ou 2, **caractérisé en ce que** les épaulements (22) comportent respectivement sur la surface (30) de la face tournée vers le premier élément (24) un bossage (34) en forme de nervure et s'étendant le long de la circonférence de l'élément (20), qui, lors de la fixation par soudage des épaulements (22) sur le premier élément (24) est utilisé en tant que réserve de soudure.

4. Dispositif selon les revendications 1, 2 ou 3, **caractérisé en ce que** l'élément (20) est réalisé en acier.

5. Méthode de réalisation d'un premier (24) ou d'un deuxième (26) éléments de transmission de couple comportant un dispositif selon la revendication 1, **caractérisée en ce que** l'élément annulaire (20) et les épaulements (22) sont réalisés à la fois par une opération d'estampage et de matriçage.

6. Méthode de réalisation d'un premier (24) ou d'un deuxième (26) éléments de transmission de couple comportant un dispositif selon la revendication 3, **caractérisée en ce que** les bossages en forme de nervure (34) dans les épaulements (22) sont réalisés en même temps et lors de l'opération de matriçage des épaulements (22).

7. Méthode de fixation d'un premier (24) ou d'un deuxième (26) éléments de transmission de couple comportant un dispositif selon une des revendications 1 à 4,
**caractérisée en ce que** sur une surface (30) du premier élément (24) appuient, dans le sens axial, les épaulements (28) du deuxième élément (26) de telle manière que l'élément (20) vient s'appuyer de telle manière dans le sens axial sur le deuxième élément (26) que les épaulements (22) de l'élément engrènent respectivement dans les creux entre des épaulements (28) juxtaposés du deuxième élément (26), et cela de manière à ce que leur faces tournées vers le premier élément (24) appuient sur la surface du premier élément (24) et **en ce que** les épaulements (22) sont fixés par une opération de fixation sur la surface (30) du premier élément (24).

8. Méthode selon la revendication 7, **caractérisée en ce que** les épaulements (22) de l'élément (20) sont fixés par une opération de soudage, le cas échéant, en épuisant le matériau des bossages en forme de nervure (34) des épaulements (22) de l'élément (20), sur la surface (30) du premier élément (24).

9. Méthode selon la revendication 8, **caractérisée en ce que** le soudage de l'élément (20) est effectué par une opération de soudage à décharge de condensateurs.

10. Méthode selon la revendication 8, **caractérisée en ce que** le soudage de l'élément (20) est effectué par une opération de soudage au laser ou par bombardement électronique.

11. Méthode selon la revendication 9 ou 10, **caractérisée en ce que** la fixation des épaulements (22) est réalisée par une opération de collage.
